# EUROPÄISCHE PATENTSCHRIFT

(11) **EP 1 646 918 B1**
(45) Veröffentlichungstag und Bekanntmachung des Hinweises auf die Patenterteilung: **26.11.2008**
(21) Anmeldenummer: 04741957.7
(22) Anmeldetag: 05.07.2004
(51) Int. Cl.: G05B 19/39, E05F 15/20, B60J 5/10

(54) **ANTRIEB ZUR AUTOMATISCHEN BETÄTIGUNG EINER FAHRZEUGTÜR**
DRIVE UNIT FOR AUTOMATICALLY ACTUATING A VEHICLE DOOR
MECANISME DE COMMANDE AUTOMATIQUE D'UNE PORTIERE DE VEHICULE

(30) Priorität: 12.07.2003 DE 10331633
(43) Veröffentlichungstag der Anmeldung: 19.04.2006
(73) Patentinhaber: Valeo Sicherheitssysteme GmbH, 85253 Erdweg (DE)
(72) Erfinder: SCHACHTL, Stephan, c/o Valeo Sécurité Habitacle, F-94042 Créteil Cedex (FR); RECZKO, Ralf, c/o Valéo Sécurité Habitacle, F-94042 Créteil Cedex (FR); MARTIN, Matthias, c/o Valeo Sécurité Habitacle, F-94042 Créteil Cedex (FR); BELLENBAUM, Dietmar, c/o Valeo Sécurité Habitacle, F-94042 Créteil Cedex (FR); VÖGERL, Thomas, c/o Valeo Sécurité Habitacle, F-94042 Créteil Cedex (FR)
(86) Internationale Anmeldenummer: PCT/EP2004/051356
(87) Internationale Veröffentlichungsnummer: WO 2005/005759

(56) Entgegenhaltungen:
- DE-A1- 10 117 935
- DE-A1- 10 236 887
- DE-A1- 19 649 698
- DE-C1- 19 523 210
- FR-A- 2 757 110

## Beschreibung

Die Erfindung betrifft einen Antrieb zur automatischen Betätigung einer Fahrzeugtür, insbesondere der Heckklappe eines Kraftfahrzeuges, wobei der Antrieb über eine Abtriebswelle auf die Fahrzeugtür oder auf eine mit der Fahrzeugtür verbundene Übertragungseinrichtung wirkt, wobei die Abriebswelle eine Schwenkbewegung der Fahrzeugtür entsprechende Schwenkbewegung ausführt, und wobei der Antrieb mindestens eine erste mit einer elektronischen Auswerteeinrichtung verbindbare Sensoreinrichtung zur Erfassung der jeweiligen winkelmäßigen Lage der Fahrzeugtür umfaßt.

Bei automatisch betätigbaren Fahrzeugtüren ist es erforderlich, mittels eines oder mehrerer Sensoren die jeweilige Position der Fahrzeugtür zu ermitteln, da diese Informationen unter anderem für die Geschwindigkeitssteuerung und die Endlagenabschaltung der Fahrzeugtür oder eine Hinderniserkennung benötigt werden. So ist beispielsweise bei einer automatisch betätigbaren Heckklappe kurz vor Erreichen der oberen und unteren Endlage eine verminderte Geschwindigkeit erforderlich, damit die Heckklappe nicht mit voller Wucht gegen die Endanschläge gefahren wird. Außerdem ist es beim Schließen der Fahrzeugtür wichtig, diese kurz vor dem kompletten Schließen langsam gegen die Türdichtung zu fahren, um das Verletzungsrisiko für den Fahrer oder die mitfahrenden Personen zu minimieren.

Die jeweilige Position der Fahrzeugtür wird üblicherweise mit Hilfe von Drehwinkelgebem ermittelt, welche beispielsweise an der Abtriebswelle des Antriebes oder der Scharnieranbindung der Fahrzeugtür angeordnet sind. Zur Absolutwerterfassung des entsprechenden Drehwinkels der Abtriebswelle werden vor allem Potentiometer oder analoge Magnetfeldsensoren als Drehwinkelgeber verwendet.

Als nachteilig hat es sich bei den analogen Drehwinkelgebem erwiesen, daß sie mit relativ hohen Kosten verbunden sind, z.T. einen hohen Verschleiß aufweisen und überdies einen großen Bauraum benötigen.

Grundsätzlich ist es zwar möglich, den Schwenkwinkel der Fahrzeugtür auch mit wesentlich kostengünstigeren inkrementalen Meßwertgebern zu bestimmen, doch weisen diese Meßwertgeber den Nachteil auf, daß die eine Zwischenposition der Fahrzeugtür charakterisierenden Daten bei vorhergehendem Stromausfall in der Regel verloren gehen. Nach einem Stromausfall kann daher keine gesteuerte Bewegung der Fahrzeugtür aus einer Zwischenposition ausgeführt werden. Erst nach einem (automatisch oder manuell durchgeführten) Schließvorgang der Fahrzeugtür, bei dem z.B. das Schloßsignal zur neuen Referenzbildung herangezogen wird, ist das System wieder kalibriert.
In der gattungsgemäßen DE-A-101 17 935 ist ein Antrieb zur automatischen Betätigung einer Heckklappe eines Kraftfahrzeuges gezeigt, bei dem der zeitliche Verlauf der Bewegung eines Antriebselementes erfaßt wird. Aus diesen Werten wird die Ist-Geschwindigkeit der Hecklappe bestimmt. Weicht die Ist-Geschwindigkeit von einer vorgegebenen Soll-Geschwindigkeit ab, wird die Geschwindigkeit der Heckklappe auf den vorgegebenen Sollwert gebracht.
FR-A-2 757 110 zeigt einen Antrieb zur automatischen Betätigung eines Schiebe-Hebe-Dachs eines Kraftfahrzeugs. Die Lageermittlung des Schiebe-Hebe-Dachs erfolgt mittels einer Meßeinrichtung zur Absolutwerterfassung sowie mittels einer Meßeinrichtung zur Erfassung des relativen Drehwinkels. Das Schiebe-Hebe-Dach kann drei Endstellungen einnehmen: Eine erste Stellung, in der das Dach komplett geschlossen ist, eine zweite Stellung, in der das Dach sich in der Endstellung Hebelage befindet, und eine dritte Stellung, in der das Dach sich in der Endstellung Schiebelage befindet. Ist das System entnormiert, findet die endgültige Normierung am Übergang von der Hebelage in die Schiebelage statt.

Der Erfindung liegt die Aufgabe zugrunde, einem Antrieb zur automatischen Betätigung einer Fahrzugtür anzugeben, der die Vorteile einer inkremental arbeitenden Positionsmessung ausnutzt, bei dem aber nach einem Stromausfall eine erneute Kalibrierung nicht erst nach Erreichen einer der Endstellungen der Fahrzeugtür erfolgt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, den gesamten Schwenkwinkel der Fahrzeugür in mindestens drei aufeinanderfolgende Zonen (Schwenkwinkelbereiche) einzuteilen, wobei die einzelnen Schwenkwinkelbereiche durch eine erste zur Absolutwerterfassung geeignete Sensoreinrichtung ermittelbar sind. Die Erfassung des Schwenkwinkels der Fahrzeutürinnerhalb der einzelnen Zonen erfolgt dann mit Hilfe einer zweiten Sensoreinrichtung, welche mindestens einen inkremental arbeitenden Meßwertgeber umfaßt.

Nach einem Stromausfall wird bei dem erfindungsgemäßen Antrieb daher zwar nicht die genane Position der Fahrzeugtür, jedoch die jeweilige Zone erkannt, innerhalb welcher sich die Fahrzeugtür befindet. Innerhalb dieser Zone kann dann die Fahrzeugtür mit einer vorgegebenen, maximal zulässigen Geschwindigkeit durch den Antrieb betätigt werden. Beim Überschreiten dieser Zone zur nächsten Zone wird dann die Inkrementalelektronik der zweiten Sensoreinrichtung automatish neu kalibriert, so daß für die Fahrzeugtür dann wiederum eine lageabhängige Geschwindigkeitssteuerung durchführbar ist.

Vorteilhafterweise können den einzelnen Zonen bestimmte Funktionen zugewiesen werden. So kann beispielsweise vorgesehen sein, daß in den Endzonen ein automatisches Schließen (untere Zone) bzw. Öffnen (obere Zone) der Fahrzeugtür nicht gestattet ist oder die Geschwindigkeit der Abtriebsachse des Antriebes, und damit auch der Fahrzeugtür, einen genan vorgegeben Geschwindigkeitsverlauf aufweist.

Damit die erste Sensoreinrichtung zur Absolutwerterfassung der einzelnen Zonen verschleißarm arbeitet, hat es sich als vorteilhaft erwiesen, eine magnetische Meßanordnung zu verwenden, die eine z.B. auf der Abtriebswelle des Antriebesangeordnete Magnetscheibe umfaßt, welche in Umfangsrichtung gesehen, mindestens zwei magnetishe Bereiche unterschiedlicher Polung aufweist. Außerdem enthält die magnetische Meßanordnung mindestens zwei die magnetischen Bereiche der Magnetscheibe abtastende Magnetfeldsensoren, wobei die magnetischen Bereiche der Magnetscheibe und die Magnetfeldsensoren derart zneinander angeordnet sind, daß sich bei Drehung der Abtriebswelle des Antriebes von der Anfangsstellung in die Endstellung und umgekehrt mindestens drei sich aneinander anschließende Winkelbereiche ergeben, wobei für jeden Winkelbereich eine andere, für diesen Winkelbereich charakteristische Zuordnung von Magnetfeldsensoren zu den mag-netischen Bereichen vorliegt.

Es hat sich außerdem gezeigt, daß die Anzahl und Anordnung der magnetischen Bereiche der Magnetscheibe und der Magnetfeldsensoren derart gewählt werden sollte, daß bei Drehung der Abtriebswelle des Antriebes von ihrer Anfangs- in ihre Endstellung eine Absolutwerterfassung von mindestens vier sich aneinander anschließenden Schwenkwinkelbereichen durchführbar ist.

Bei der Drehachse des Antriebes, an welcher die Sensoreinrichtungen angeordnet sind, muß es sich nicht zwingend um die Abtriebswelle des Antriebes handeln. So hat es sich beispielsweise bei einem Antrieb mit mehreren hintereinander angeordneten Getriebestufen als zweckmäßig erwiesen, wenn die Magnetscheibe der ersten Sensoreinrichtung aus Platzgründen zwischen zwei Getriebestufen angeordnet wird. Allerdings muß bei einer derartigen Anordnung ein zusätzliches Getriebe vorgesehen werden, welches eine Abtriebseinrichtung aufweist, die eine von der ersten Sensoreinrichtung detekierbare, der Abtriebswelle analoge Drehbewegung ausführt. Dieses kann beispielsweise mit Hilfe eines Taumelscheibengetriebes erfolgen, wenn die Magnetscheibe als Taumelscheibe ausgebildet ist

Weitere Einzelheiten und Vorteile der Erfindung ergeben sich aus den folgenden anhand von Figuren erläuterten Ausführungsbeispielen. Es zeigen:
- Fig. die schematische Ansicht einer geöffneten Heckklappe im Bereich des Dachträgers eines Kraftfahrzeuges mit einem sich parallel zur Scharnierachse erstreckenden erfindungsgemäßen Antrieb;
- Fig.2 die Seitenansicht eines erfindungsgemäßen Antriebes mit einer eine Magnetscheibe und Magnetfeldsensoren umfassenden ersten Sensoranordnung zur Absolutwerterfassung des Schwenkwinkels der Heckklappe;
- Fig.3 einen Querschnitt entlang der in Fig.2 mit III-III bezeichneten Schnittlinie sowie eine gestrichelte Darstellung der Magnetfeldsensoren zur Andeutung ihrer Lage in bezug auf die Magnetscheibe;
- Fig.4 eine Draufsicht auf ein zweites Ausführungsbeispiel einer Magnetscheibe der ersten Sensoranordnung und eine Darstellung der Magnetfeldsensoren zur Andeutung ihrer Lage in bezug auf die Magnetscheibe;
- Fig.5 eine Seitenansicht der Fig.4 entsprechenden Anordnung.

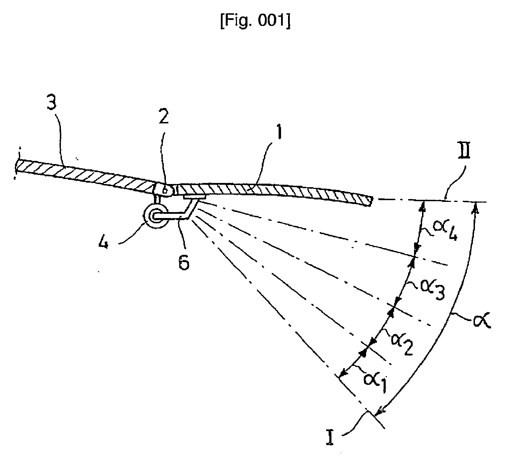

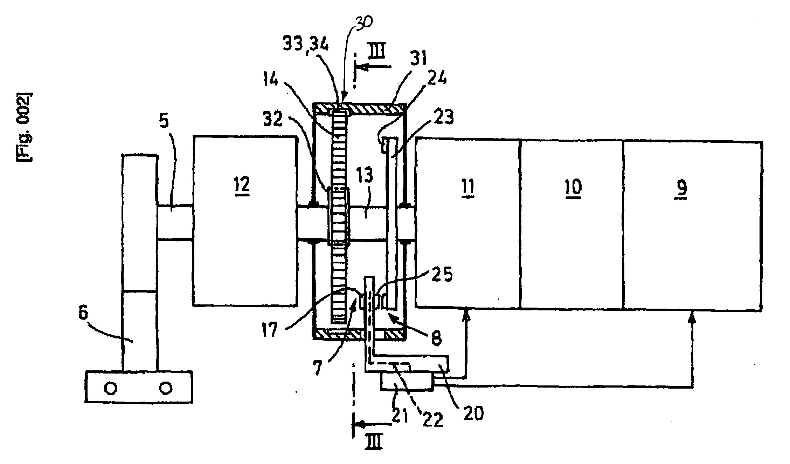

In Fig.1 ist mit 1 die Heckklappe eines Kraftfahrzeuges bezeichnet, die um eine Scharnierachse 2 an dem Dachträger 3 eines entsprechenden Fahrzeuges verschwenkbar angeordnet ist. Die Schwenkbewegung der Heckklappe 1 von ihrer mit I bezeichneten geschlossenen Stellung in ihre in Fig.1 dargestellten geöffneten Stellung II erfolgt mit Hilfe eines Antriebes 4, dessen Längsachse sich parallel zur Scharnierachse 2 erstreckt, und welcher an der Abtriebswelle 5 des Antriebes 4 (Fig.2) eine mit der Heckklappe 1 verbundene Hebel-anordnung 6 betätigt.

Wie aus Fig.1 ersichtlich ist, ist der gesamte zwischen geöffneter und geschlossener Stellung der Fahrzeugtür erforderliche Schwenkwinkel a in 4 Schwenkwinkelbereiche (Zonen) α1, α2, α3, und α4 eingeteilt. In welcher Zone sich die Heckklappe 1 bei ihrer Bewegung in die geöffnete oder geschlossene Stellung oder bei einem Stillstand in einer Zwischenlage gerade befindet, wird mittels zweier in dem Antrieb 4 integrierter Sensoreinrichtungen 7, 8 erfaßt und wird nachfolgend noch näher beschrieben.

In Fig.2 ist der erfindungsgemäße Antrieb 4 dargestellt. Dieser umfaßt einen Elektromotor 9, eine dem Elektromotor 9 nachgeschaltete erste Getriebestufe 10 zur Herabsetzung der Drehzahl der Abtriebswelle des Elektromotors 9, eine Schaltkupplung 11, eine zweite Getriebestufe 12, deren Abtriebswelle 5 identisch mit der Abtriebswelle des Antriebes 4 ist und eine der Schwenkbewegung der Heckklappe 1 entsprechende Schwenkbewegung ausführt und die über die Hebelanordnung 6 mit der Heckklappe 1 (Fig.1) verbindbar ist. Zwischen der Schaltkupplung 11 und der zweiten Getriebestufe 12 sind die beiden Sensoreinrichtungen 7, 8 zur Positionsermittlung der Abtriebswelle 5 des Antriebes 4 und damit auch der Heckklappe 1 in einem Gehäuse 31 angeordnet.

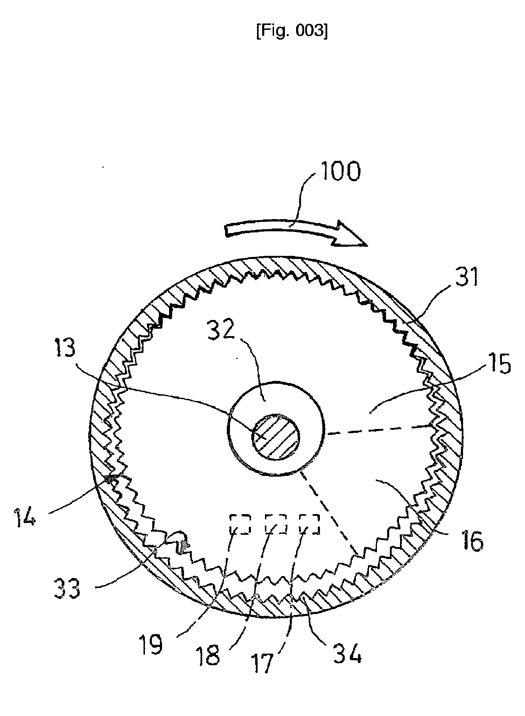

Die erste Sensoreinrichtung 7 dient zur Absolutwerterfassung der vier Zonen α1, α2, α3, und α4 der Heckklappe 1. Sie umfaßt eine an der Abtriebswelle 13 der Schaltkupplung 11 mit dieser drehbar verbundene erste Magnetscheibe 14, wie sie beispielsweise in Fig.3 dargestellt ist und die, in Umfangsrichtung gesehen, zwei magnetische Bereiche 15, 16 unterschiedlicher Polung aufweist. Dabei bildet in Fig.3 der mit 15 bezeichnete Bereich den Nordpol und der mit 16 bezeichnete magnetische Bereich den Südpol.

Außerdem weist die erste Sensoreinrichtung 7 drei Magnetfeldsensoren (z.B. Hallsensoren) 17-19 auf, die in einem vorgegebenen Abstand seitlich an der ersten Magnetscheibe 14 positioniert sind und in Fig.3 durch gestrichelt dargestellte Quadrate angedeutet sind. Die Magnetfeldsensoren 17-19 sind gehäusefest an einem Träger 20 angeordnet (Fig.2), an dem außerdem eine elektronische Auswerteeinrichtung 21 befestigt ist, welche über entsprechende Leitungen 22 mit den Magnetfeldsensoren 17-19 verbunden ist.

Die erste Magnetscheibe 14 ist als Taumelscheibe ausgebildet. Hierzu ist sie auf einem als Exzenter ausgebildeten Nocken 32 der Abtriebswelle 13 drehbar angeordnet und weist auf ihrem äußeren Umfang Zähne 33 auf, welche abschnittsweise in entsprechende Zähne 34 des als Hohlrad ausgebildeten Gehäuses 31 eingreifen (Fig.3). Beim Drehen der Abtriebswelle 13 wird dann die Magnetscheibe 14 am Hohlrad des Gehäuses 31 durch die Mitnahme durch den Nocken 32 abgewälzt. Dadurch kommt es zu einer taumelnden, gegenüber der Drehung der Abtriebswelle 13 der Schaltkupplung 11 langsameren Drehung der Mag-netscheibe 14, die derart gewählt ist, daß sie der Umdrehungsgeschwindigkeit der Abtriebswelle 5 der zweiten Getriebestufe 12 entspricht.

Wird nun die Heckklappe 1 durch Aktivierung des Elektromotors 9 oder manuell betätigt, so dreht sich die erste Magnetscheibe 14 mit einer der Abtriebswelle 5 entsprechenden Drehzahl. Die drei Magnetfeldsensoren 17-19 liefern ein dem empfangenen Magnetfeld entsprechendes logisches Signal. Befindet sich einer der Sensoren 17-19 im magnetischen Bereich 15, so wird von diesem Sensor beispielsweise eine logische "1" an die elektronische Auswerteeinheit 21 übertragen. Befindet sich der jeweilige Sensor im magnetischen Bereich 16, so wird eine "0" an die elektronische Auswerteeinheit 21 übertragen.

Da sich bei dem dargestellten Ausführungsbeispiel zunächst alle drei Sensoren 17-19 innerhalb des magnetischen Bereiches 15 befinden, ist die erste Zone α1 durch das logische Signal 111 charakterisiert. Bei Drehung der ersten Magnetscheibe 14 in Richtung des Pfeiles 100 (Fig.3) gelangt zunächst nur der erste Sensor 17 in den magnetischen Bereich 16 der ersten Magnetscheibe 14, während die beiden anderen Sensoren 18, 19 noch in dem magnetischen Bereich 15 verbleiben, so daß sich für die zweite Zone α2 das logische Signal 011 ergibt. Die dritte Zone α3 ist dann durch das logische Signal 001 und die vierte Zone α4 schließlich durch das Signal 000 eindeutig bestimmt.

Nach einem Ausfall der Stromversorgung der elektronischen Auswerteeinrichtung 21 wird die entsprechende Zone, in dem sich die Heckklappe 1 befindet, sofort wieder erkannt, weil an dem Eingang der Auswerteeinrichtung 21 der diesen Bereich charakterisierende Signalwert anliegt.

Für die genaue Lagebestimmung der Heckklappe 1 innerhalb der einzelnen Zonen α 1-α4 wird die als inkrementaler Meßwertgeber ausgebildete zweite Sensoreinrichtung 8 verwendet. Diese umfaßt in dem in Fig.2 dargestellten Ausführungsbeispiel eine zweite Mag-netscheibe 23 mit einer Vielzahl über den Umfang gleichmäßig verteilt angeordneter Mag-nete 24. Die zweite Magnetscheibe 23 ist direkt an der Abtriebswelle 13 der Schaltkupplung 11 befestigt. Außerdem umfaßt die zweite Sensoreinrichtung 8 einen Magnetfeldsensor 25 (z.B. Hallsensor), welcher ebenfalls an dem gehäusefesten Träger 20 befestigt und elektrisch mit der elektronischen Auswerteeinrichtung 21 verbunden ist. Die Kalibrierung der zweiten Sensoreinrichtung 8 erfolgt vorzugsweise immer dann, wenn die erste Sensoreinrichtung 7 einen Übergang benachbarter Zonen detektiert hat.

Nach einem Stromausfall wird daher die Fahrzeugtür zunächst innerhalb der jeweiligen, mittels der ersten Sensoreinrichtung 7 detektierten Zone α1-α4 mit einer vorgegebenen, maximal zulässigen Geschwindigkeit durch den Antrieb 4 betätigt. Beim Überschreiten dieser Zone zur nächsten Zone wird dann die in der elektronischen Auswerteeinrichtung 21 enthaltenen Inkrementalelektronik der zweiten Sensoreinrichtung 8 automatisch neu kalibriert und die Heckklappe 1 führt anschließend wiederum eine lageabhängige Geschwindigkeitssteuerung durch.

Die Erfindung ist selbstverständlich nicht auf das vorstehend beschriebene Ausführungsbeispiel beschränkt. So können beispielsweise die beiden Sensoreinrichtungen auch direkt an der Abtriebswelle 5 des Antriebes 4 angeordnet werden, so daß ein Taumelscheibengetriebe entfallen kann.

Ferner kann das Taumelscheibengetriebe auf einfache Weise in die zweite Getriebestufe integriert werden, wenn es sich bei dieser Getriebestufe um ein Planetengetriebe handelt, dessen Gehäuse ohnehin als Hohlrad ausgebildet ist. Dabei kann die Innenverzahnung zwischen Hohlrad und den Planetenrädern des Planetengetriebes eine andere sein als zwischen Hohlrad und Magnetscheibe (bzw. Magnetscheibenträger).

Außerdem können die Magnetfeldsensoren der ersten Sensoreinrichtung auch entlang des äußeren Randes der Magnetscheibe und beabstandet von dieser angeordnet sein. Außerdem kann die Magnetscheibe auch mehr als zwei magnetische Bereiche aufweisen und die Anzahl der die magnetischen Bereiche abtastenden Sensoren kann auch z.B. nur zwei betragen.

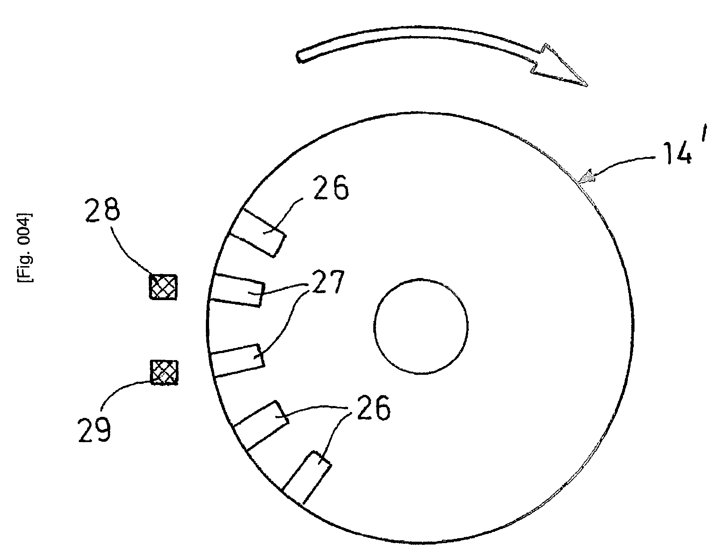

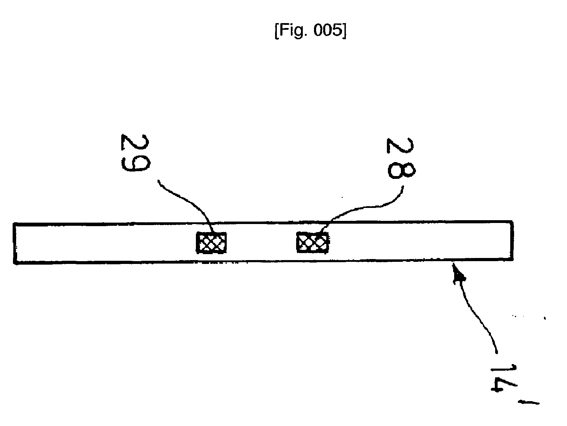

Ein entsprechendes Ausführungsbeispiel ist den Fig.4 und 5 entnehmbar. Dabei weist in diesem Fall die Magnetscheibe 14' fünf magnetische Bereiche auf, wobei z.B. die mit 26 bezeichneten magnetischen Bereiche jeweils einen Nordpolbereich und die mit 27 bezeichneten magnetischen Bereiche jeweils einen Südpolbereich bilden. Ordnet man einem ersten Magnetfeldsensor 28 beim Empfang eines magnetischen Bereiches 26 eine "0" und dem jeweils zweiten Magnetfeldsensor 29 in diesem Fall eine "1" zu, so werden die einzelnen Zonen durch die digitalen Signalwerte 00, 10, 11 und 01 eindeutig bestimmt.

### Bezugszeichenliste

1 Heckklappe, Fahrzeugtür
2 Scharnierachse
3 Dachträger
4 Antrieb
5 Abtriebswelle (Antrieb), Drehachse
6 Hebelanordnung, Übertragungseinrichtung
7 (erste) Sensoreinrichtung
8 (zweite) Sensoreinrichtung
9 Elektromotor
10 (erste) Getriebestufe
11 Schaltkupplung
12 zweite Getriebestufe
13 Abtriebswelle (Schaltkupplung), Drehachse
14,14' (erste) Magnetscheibe
15 magnetischer Bereich (Nordpol)
16 magnetischer Bereich (Südpol)
17-19 Magnetfeldsensoren
20 Träger
21 (elektronische) Auswerteeinrichtung
22 Leitung
23 zweite Magnetscheibe
24 Magnet
25 Magnetfeldsensor
26 magnetischer Bereich (Nordpol)
27 magnetischer Bereich (Südpol)
28 erste Magnetfeldsensor
29 zweite Magnetfeldsensor
30 Taumelscheibengetriebe, Getriebe
31 Gehäuse, Hohlrad
32 Nocken
33, 34 Zähne
100 Pfeil
I geschlossene Stellung der Fahrzeugtür/Heckklappe
II geöffnete Stellung der Fahrzeugtür/Heckklappe
α1-α4 Schwenkwinkelbereiche, Zonen

## Patentansprüche

1. Antrieb zur automatischen Betätigung einer Fahrzeugtür, insbesondere der Heckklappe eines Kraftfahrzeuges, wobei der Antrieb (4) über eine Abtriebswelle (5) auf die Fahrzeugtür (1) oder auf eine mit der Fahrzeugtür (1) verbundene Übertragungseinrichtung (6) wirkt, wobei die Abtriebswelle (5) eine der Schwenkbewegung der Fahrzeugtür (1) entsprechende Schwenkbewegung ausführt, und wobei der Antrieb (4) mindestens eine erste mit einer elektronischen Auswerteeinrichtung (21) verbindbare Sensoreinrichtung (7) zur Erfassung der jeweiligen winkelmäßigen Lage der Fahrzeugtür (1) umfaßt,
**dadurch gekennzeichnet, daß**
a) die erste Sensoreinrichtung (7) eine Drehwinkelmeßeinrichtung zur Absolutwerterfassung mindestens dreier sich aneinander anschließender Schwenkwinkelbereiche (α₁-α₄) der Fahrzeugtür (1) umfaßt, welche den gesamten Schwenkwinkel (α) zwischen der geschlossenen Stellung (I) der Fahrzeugtür (1) und der geöffneten Stellung (II) der Fahrzeugtür überdecken, und daß
b) der Antrieb (4) mindestens eine zweite Sensoreinrichtung (8) umfaßt, welche mindestens einen inkrementalen Meßwertgeber zur relativen Positionsmessung der Abtriebswelle (5) des Antriebes (4) in bezug auf den Anfang oder das Ende des jeweiligen Schwenkwinkelbereiches (α₁, α₂, α₃) aufweist, wobei die Kalibrierung der zweiten Sensoreinrichtung (8) immer dann erfolgt, wenn die erste Sensoreinrichtung (7) einen Übergang benachbarter Schwenkwinkelbereiche (α₁, α₂, α₃) detektiert.

2. Antrieb nach Anspruch 1, **dadurch gekennzeichnet, daß** die erste Sensoreinrichtung (7) zur Absolutwerterfassung der Schwenkwinkelbereiche (α₁, α₂, α₃) der Fahrzeugtür (1) an der Abtriebswelle (5) des Antriebes (4) angeordnet ist und dessen Schwenkbewegung erfaßt.

3. Antrieb nach Anspruch 1, **dadurch gekennzeichnet, daß** bei einem Antrieb (4) mit mehreren hintereinander angeordneten Getriebestufen (10, 12) die erste Sensoreinrichtung (7) zwischen zwei Getriebestufen (10, 12) angeordnet ist, und daß ein zusätzliches Getriebe (30) vorgesehen ist, welches eine Abtriebseinrichtung aufweist, die eine von der ersten Sensoreinrichtung (7) detektierbare, der Abtriebswelle analoge Drehbewegung ausführt.

4. Antrieb nach Anspruch 2 oder 3, **dadurch gekennzeichnet, daß** die erste Sensoreinrichtung (7) mindestens eine auf der Abtriebswelle (5) des Antriebes (4) oder an der Abtriebseinrichtung des zusätzlichen Getriebes (30) angeordnete erste Magnetscheibe (14; 14') enthält, die, in Umfangsrichtung gesehen, mindestens zwei magnetische Bereiche (15, 16; 26, 27) unterschiedlicher Polung aufweist, und mindestens zwei die magnetischen Bereiche (15, 16; 26, 27) der Magnetscheibe (14; 14') abtastende Magnetfeldsensoren (17-19; 28, 29) enthält, wobei die magnetischen Bereiche (15, 16; 26, 27) der Magnetscheibe (14; 14') und die Magnetfeldsensoren (17-19; 28, 29) derart zueinander angeordnet sind, daß sich bei Drehung der Abtriebswelle (5) des Antriebes (4) oder der Abtriebseinrichtung des zusätzlichen Getriebes (30) von der Anfangsstellung in die Endstellung und umgekehrt mindestens drei sich aneinander anschließende Winkelbereiche (α₁-α₄) ergeben, wobei sich für jeden Winkelbereich eine andere, für diesen Winkelbereich charakteristische Zuordnung von Magnetfeldsensoren (17-19; 28, 29) zu den magnetischen Bereichen (15,16; 26, 27) ergibt.

5. Antrieb nach Anspruch 4, **dadurch gekennzeichnet, daß** die Anzahl und Anordnung der magnetischen Bereiche (15, 16; 26, 27) der Magnetscheibe (14; 14') und der Magnetfeldsensoren (17-19; 28, 29) derart gewählt ist, daß bei Drehung der Abtriebswelle (5) des Antriebes (1) oder der Abtriebseinrichtung des zusätzlichen Getriebes (30) von ihrer Anfangs- in ihre Endstellung eine Absolutwerterfassung von mindestens vier sich aneinander anschließenden Schwenkwinkelbereichen (α₁-α₄) durchführbar ist.

6. Antrieb nach Anspruch 5, **dadurch gekennzeichnet, daß** die Magnetscheibe (14) zwei sektorförmige magnetische Bereiche (15, 16) unterschiedlicher Polung aufweist und drei Magnetfeldsensoren (17-19) nebeneinander angeordnet sind, derart, daß in der Ausgangsstellung zunächst alle drei Magnetfeldsensoren (17-19) von dem Magnetfeld des ersten magnetischen Bereiches (16) beaufschlagt werden und bei Drehung der Abtriebswelle (5) des Antriebes (4) oder der Abtriebseinrichtung des zusätzlichen Getriebes (30) dann die Magnetfeldsensoren (17-19) nacheinander in den zweiten magnetischen Bereich (15) gelangen.

7. Antrieb nach einem der Ansprüche 4 bis 6, **dadurch gekennzeichnet, daß** die Magnetfeldsensoren (28, 29) entlang des äußeren Randes der Magnetscheibe (14') und beabstandet von dieser angeordnet sind.

8. Antrieb nach einem der Ansprüche 4 bis 6, **dadurch gekennzeichnet, daß** die Magnetfeldsensoren (17-19) in einem vorgegebenen Abstand seitlich an der Magnetscheibe (14) positioniert sind.

9. Antrieb nach Anspruch 3 in Verbindung mit einem der Ansprüche 4 bis 8, **dadurch gekennzeichnet, daß** die erste Magnetscheibe (14) der ersten Sensoreinrichtung (7) als Taumelscheibe eines Taumelscheibengetriebes (30) ausgebildet ist, wobei die Magnetscheibe (14) auf einem mit der Abtriebswelle (13) drehfest verbundenen, als Exzenter ausgebildeten Nocken (32) drehbar angeordnet ist und sich bereichsweise an einem gehäusefesten Hohlrad (31) abwälzt.

10. Antrieb nach Anspruch 9, **dadurch gekennzeichnet, daß** es sich bei der zweiten Getriebestufe (12) um ein Planetengetriebe handelt, dessen Gehäuse als Hohlrad für das Taumelscheibengetriebe ausgebildet ist.

11. Antrieb nach einem der Ansprüche 4 bis 10, **dadurch gekennzeichnet, daß** es sich bei den Magnetfeldsensoren (17-19; 28, 29) um Hallsensoren handelt.

## Claims

1. Drive unit for automatically actuating a vehicle door, particularly the tailgate of a motor vehicle, whereby the drive unit (4) operates via a drive shaft (5) on the vehicle door (1) or on a transmission device (6) connected with the vehicle door (1), whereby the drive shaft (5) performs a pivoting movement that corresponds with the pivoting movement of the vehicle door (1), and whereby the drive unit (4) comprises at least one first sensor unit (7), which can be connected with an electronic evaluation unit (21) and which detects the respective angular position of the vehicle door (1), **characterized in that**
a. the first sensor unit (7) comprises a rotational angle measuring device for determining the absolute value of at least three successively tangent pivot angle ranges (α1- α4) of the vehicle door (1), which spans across the entire pivot angle (α) between the closed position (I) of the vehicle door (1) and the opened position (II) of the vehicle door (1), and that
b. the drive unit (4) comprises at least a second sensor unit (8), which has at least one incremental measuring transducer for the measurement of the relative position of the drive shaft (5) of the drive unit (4), as regarding the beginning or end of each pivot angle range (α1, α2, α3), whereby the calibration of the second sensor unit (8) always occurs when the first sensor unit (7) detects a crossing of neighbouring pivot angle ranges (α1, α2, α3).

2. Drive unit according to Claim 1, **characterized in that** the first sensor unit (7), for determining the absolute value of the pivot angle ranges (α1, α2, α3) of the vehicle door (1), is arranged on the drive shaft (5) of the drive unit (4) and determines the pivoting movement thereof.

3. Drive unit according to Claim 1, **characterized in that** with a drive unit (4) with several successively arranged gear stages (10, 12), the first sensor unit (7) is positioned between two gear stages (10, 12), and that an additional transmission (30) is provided, which has a drive device that performs a rotational movement analogous to the drive shaft, which is capable of being detected by the first sensor unit (7).

4. Drive unit according to Claims 2 or 3, **characterized in that** the first sensor unit (7) contains at least a first magnetic disc (14; 14'), which is arranged on the drive shaft (5) of the drive unit (4) or on the drive device of the additional transmission (30), which, seen in the circumferential direction, has at least two magnetic ranges (15, 16; 26, 27) with differing polarity and at least two magnetic ranges (15, 16; 26, 27) of the magnetic-field sensors (17-19; 28, 29) that probe the magnetic disc (14; 14'), whereby the magnetic ranges (15, 16; 26, 27) of the magnetic disc (14, 14') and the magnetic-field sensors (17-19; 28, 29) are arranged in relation to one another in such a manner that with the rotation of the drive shaft (5) of the drive unit (4) or the drive device of the additional transmission (30) from the starting position into the end position, and the other way round, there results at least three successively tangent pivot angle ranges (α1- α4), whereby the result for each pivot angle range is a characteristically differing respective arrangement of magnetic-field sensors (17-19; 28, 29) to the magnetic ranges (15, 16; 26, 27).

5. Drive unit according to Claim 4, **characterized in that** the number and arrangement of the magnetic ranges (15, 16; 26, 27) and the magnetic-field sensors (17-19; 28, 29) are selected in such a manner that with the rotation of the drive shaft (5) of the drive unit (1) or the drive device of the additional transmission (30) from the starting position into the end position, a determination the absolute value of at least four successively tangent pivot angle ranges (α1-α4) can be performed.

6. Drive unit according to Claim 5, **characterized in that** the magnetic disc (14) has two sector-forming magnetic ranges (15, 16) of differing polarity, and three magnetic-field sensors (17-19) are adjacently arranged, so that is the starting position the three magnetic-field sensors (17-19) are initially discharged by the magnetic field of the first magnetic range (16) and with the rotation of the drive shaft (5) of the drive unit (4) or the drive device of the additional transmission (30), the magnetic-field sensors (17-19) then successively reach the second magnetic range (15).

7. Drive unit according to Claims 4 through 6, **characterized in that** the magnetic-field sensors (28, 29) are arranged along the outer edge of the magnetic disc (14') and are separate from this.

8. Drive unit according to Claims 4 through 6, **characterized in that** the magnetic-field sensors (17-19) are positioned on the side of the magnetic disc (14) with a given spatial separation.

9. Drive unit according to Claim 3, in connection with one of the claims 4 through 8, **characterized in that** the first magnetic disc (14) of the first sensor unit (7) is in the form of a swash plate belonging to a swash plate mechanism, whereby the magnetic disc (14) is screwed tightly to the drive shaft (13) and is arranged as a pivoting cam (32) formed as eccentric and which rolls within a specific range upon an encased ring gear (31).

10. Drive unit according to Claim 9, **characterized in that** the second gear stage (12) is a planetary gear, the housing of which is formed as a ring gear for the swash plate mechanism.

11. Drive unit according to one of the Claims 4 through 10, **characterized in that** the magnetic-field sensors (17-19; 28, 29) are in the form of hall sensors.

## Revendications

1. Mécanisme de commande destiné à la commande automatique d'une porte de véhicule, notamment du hayon d'un véhicule automobile, le mécanisme de commande (4) agissant sur la porte de véhicule (1) ou sur un système de transmission (6) relié à la porte de véhicule (1) par l'intermédiaire d'un arbre de sorte (5), l'arbre de sortie (5) exécutant un mouvement de pivotement correspondant au mouvement de pivotement de la porte de véhicule (1), et le mécanisme de commande (4) comprenant au moins un premier système de détection (7) de la position angulaire respective de la porte de véhicule (1), relié à un système d'évaluation électronique (21), **caractérisé en ce que**
a) le premier système de détection (7) comprend un système de mesure d'angle de rotation destiné à la détection de la valeur absolue d'au moins trois zones d'angle (α₁ - α₄) successives de la porte de véhicule (1) qui recouvrent la totalité de l'angle de pivotement (α) entre la position fermée (I) de la porte de véhicule (1) et la position ouverte (II) de la porte de véhicule, et **en ce que**
b) le mécanisme de commande (4) comprend au moins un deuxième système de détection (8) qui présente au moins un capteur incrémentiel de mesure pour la mesure de la position relative de l'arbre de sortie (5) du mécanisme de commande par rapport au début ou à la fin de la zone respective d'angle de pivotement (α₁, α₂, α₃), le calibrage du deuxième système de détection (8) s'effectuant toujours au moment où le premier système de détection (7) détecte une transition de zones d'angle de pivotement (α₁, α₂, α₃) successives.

2. Mécanisme de commande selon la revendication 1, **caractérisé en ce que** le premier système de détection (7) destiné à la détection de la valeur absolu des zones d'angles de pivotement (α₁, α₂, α₃) de la porte de véhicule (1) est disposé sur l'arbre de sortie (5) du mécanisme de commande (4) pour détecter le mouvement de pivotement de celui-ci.

3. Mécanisme de commande selon la revendication 1, **caractérisé en ce que** dans le cas d'un mécanisme de commande (4) à plusieurs étages de transmission (10, 12), le premier système de détection (7) est disposé entre deux étages de transmission (10, 12), et **en ce qu'**un engrenage (30) supplémentaire présentant un système de sortie est prévu, lequel système de sortie exécute un mouvement de rotation analogue à celui de l'arbre de sortie et détectable par le premier système de détection (7).

4. Mécanisme de commande selon l'une quelconque des revendications 2 ou 3, **caractérisé en ce que** le premier système de détection (7) comporte au moins un disque magnétique (14 ; 14') disposé sur l'arbre de sortie (5) du mécanisme de commande (4) ou sur le système de sortie de l'engrenage (30) supplémentaire, qui, vu dans le sens périphérique, comprend au moins deux zones magnétiques (15, 16 ; 26, 27) de polarisation différente, et au moins deux capteurs de champ magnétique (17-19 ; 28, 29) balayant les zones magnétiques (15, 16 ; 26, 27) du disque magnétique (14 ; 14'), les zones magnétiques (15, 16 ; 26, 27) du disque magnétique (14 ; 14') et les capteurs de champ magnétique (17-19 ; 28, 29) étant disposés les uns par rapport aux autres de manière telle qu'en cas de rotation de l'arbre de sortie (5) du mécanisme de commande (4) ou du système de sortie de l'engrenage (30) supplémentaire depuis la position initiale vers la position finale, on obtienne au moins trois zones d'angle (α₁ - α₄) successives, l'attribution caractéristique de capteurs de champ magnétique (17-19 ; 28, 29) à chacune des zones d'angle étant différente pour chacune des zones d'angle.

5. Mécanisme de commande selon la revendication 4, **caractérisé en ce que** le nombre et la disposition des zones magnétiques (15, 16 ; 26, 27) du disque magnétique (14 ; 14') et des capteurs de champ magnétique (17-19 ; 28, 29) sont choisis de manière telle que lors d'une rotation de l'arbre de sortie (5) du mécanisme de commande (1) ou du système de sortie de l'engrenage (30) supplémentaire depuis sa position initiale vers sa position finale, une détection de valeur absolu d'au moins quatre zones d'angle de pivotement (α₁,-α₄) successives est réalisable.

6. Mécanisme de commande selon la revendication 5, **caractérisé en ce que** le disque magnétique (14) présente deux zones magnétiques (15, 16) en forme de secteurs, de polarisation différente, et **en ce que** trois capteurs de champ magnétique (17-19) sont juxtaposés de manière qu'en position initiale, les trois capteurs de champ magnétique (17-19) sont, dans un premier temps, sollicités par le champ magnétique de la première zone magnétique (16) et qu'en cas de rotation de l'arbre de sortie (5) du mécanisme de commande (4) ou du système de sortie de l'engrenage (30) supplémentaire, les capteurs de champ magnétique (17-19) atteignent l'un après l'autre la deuxième zone magnétique (15).

7. Mécanisme de commande selon l'une des revendications 4 à 6, **caractérisé en ce que** les capteurs de champ magnétique (28, 29) sont disposés le long du bord extérieur du disque magnétique (14') et à distance de celui-ci.

8. Mécanisme de commande selon l'une des revendications 4 à 6, **caractérisé en ce que** les capteurs de champ magnétique (17-19) sont positionnés à une distance prédéterminée sur le côté du disque magnétique (14).

9. Mécanisme de commande selon la revendication 3, prise en combinaison avec l'une des revendications 4 à 8, **caractérisé en ce que** le premier disque magnétique (14) du premier système de détection (7) est réalisé sous la forme d'un plateau oscillant d'un mécanisme à plateau oscillant (30), le disque magnétique (14) étant disposé rotatif sur une came réalisée sous la forme d'un excentrique et reliée solidaire en rotation à l'arbre de sortie (13), et roulant, par endroits, sur une couronne (31) solidaire du carter.

10. Mécanisme de commande selon la revendication 9, **caractérisé en ce que** le deuxième étage de transmission (12) est un engrenage planétaire dont le carter est réalisé sous la forme d'une couronne destinée au mécanisme à plateau oscillant.

11. Mécanisme de commande selon l'une des revendications 4 à 10, **caractérisé en ce que** les capteurs de champ magnétique (17-19 ; 28, 29) sont des capteurs à effet Hall.
